# EUROPEAN PATENT APPLICATION

(11) **EP 4 823 104 A1**
(43) Date of publication of application: **14.10.2026**
(21) Application number: 26167601.9
(22) Date of filing: 25.03.2026
(51) Int. Cl.: H04N 23/56, G06T 5/00, H04N 13/261, H04N 13/366

(54) **METHOD AND SYSTEM FOR GENERATING DISPLAY DATA**

(30) Priority: 10.04.2025 US 202563786330 P; 02.05.2025 US 202563798578 P; 27.11.2025 CN 202511766246
(71) Applicant: InnoLux Corporation, Jhunan Town Miao li 35053 (TW)
(72) Inventor: LIOU, Hao-Yu, 35053 Jhunan Town, Miaoli County (TW); SUMI, Naoki, 35053 Jhunan Town, Miaoli County (TW); WENG, Ruey-Jer, 35053 Jhunan Town, Miaoli County (TW); LU, Wei-Yi, 35053 Jhunan Town, Miaoli County (TW); YANG, Hung-Wen, 35053 Jhunan Town, Miaoli County (TW)
(74) Representative: Becker, Eberhard

(57) **Abstract**

A generation method of display data and a generation system of display data are provided. The generation method of display data includes the following steps: multiple captured images (901 to 903, 1210_1 to 1210_N, 1310_1 to 1310_M, 1410, 1420, 1430) are stored, in which the captured images (901 to 903, 1210_1 to 1210_N, 1310_1 to 1310_M, 1410, 1420, 1430) have different light intensity distributions; at least two captured images are selected from the captured images (901 to 903, 1210_1 to 1210_N, 1310_1 to 1310_M, 1410, 1420, 1430); and the display data is generated according to the at least two captured images. Therefore, the generation method of display data and the generation system of display data may effectively generate display data.

## Description

### BACKGROUND

### Technical Field

The disclosure relates to a data generation technology, and more particularly to a generation method of display data and a generation system of display data.

### Description of Related Art

Conventional three-dimensional (3D) display effects may merely present a stereoscopic sensation through images from different viewing angles. In this regard, since object images from different viewing angles also produce geometric position shifts, conventional image capturing means are unable to enable the captured results to present material features close to reality when applied to three-dimensional displays.

### SUMMARY

According to an embodiment of the disclosure, the generation method of display data includes the following steps: multiple captured images are stored, in which the captured images have different light intensity distributions; at least two captured images are selected from the captured images; and the display data is generated according to the at least two captured images.

According to an embodiment of the disclosure, a display system includes a display device, a storage device, and a processing device. The storage device is used for storing multiple captured images. The captured images are generated by shooting a capturing target illuminated by a first light source device at different light source positions via an image capturing device. The processing device is coupled to the display device and the storage device, and is used for selecting at least two captured images from the captured images. The processing device generates display data according to the at least two captured images, and drives the display device according to the display data.

Based on the above, the generation method of display data and the generation system of display data according to the disclosure may utilize at least two captured images having different light intensity distributions to generate display data.

### BRIEF DESCRIPTION OF THE DRAWINGS

FIG. 1 is a schematic diagram of a display system according to an embodiment of the disclosure.
FIG. 2 is a flowchart of a generation method of display data according to an embodiment of the disclosure.
FIG. 3 to FIG. 8 are schematic diagrams of generating captured images according to embodiments of the disclosure.
FIG. 9 to FIG. 11 are schematic diagrams of multiple captured images according to embodiments of the disclosure.
FIG. 12 and FIG. 13 are schematic diagrams of generating display data according to embodiments of the disclosure.
FIG. 14 is a schematic diagram of generating a composite image according to an embodiment of the disclosure.

### DESCRIPTION OF THE EMBODIMENTS

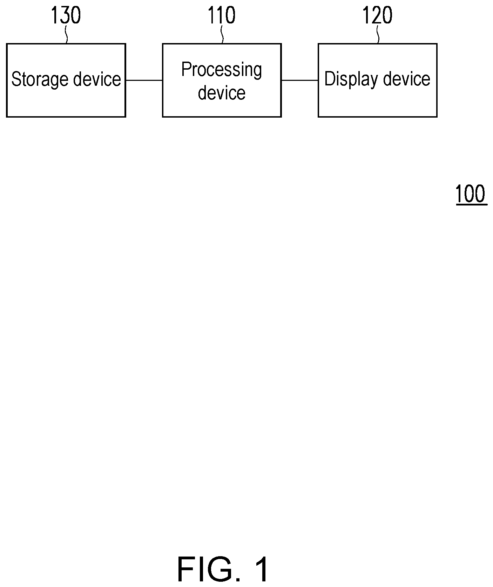

Referring to FIG. 1, a display system 100 includes a processing device 110, a display device 120, and a storage device 130. The processing device 110 is coupled to the display device 120 and the storage device 130. The storage device 130 is used to store multiple captured images. The processing device 110 may read at least a portion of the captured images stored in the storage device 130, and generate display data according to the at least a portion of the captured images. The processing device 110 may output the display data to the display device 120 to drive the display device 120 according to the display data.

The display device 120 may be, for example, a three-dimensional display, an autostereoscopic (a naked eye) three-dimensional display, an augmented reality (AR) display, a virtual reality (VR) display, a mixed reality (MR) display, a multi-view three-dimensional display, or a light field display. The processing device 110 may output the display data to a light field display device, so that the light field display device may display images with enhanced material gloss (light field gloss) display effect for observers viewing from different viewing angles based on the display data. When the display device displays data as light field gloss content, the display device is a light field gloss display. The storage device 130 may include, for example, a memory. The memory may be, for example, a non-volatile memory (NVM). The storage device 130 may be used to store related programs, modules, data, or algorithms for implementing various embodiments of the disclosure, and the related programs, modules, data, or algorithms are accessed and executed by the processing device 110 to implement the related functions and operations described in various embodiments of the disclosure.

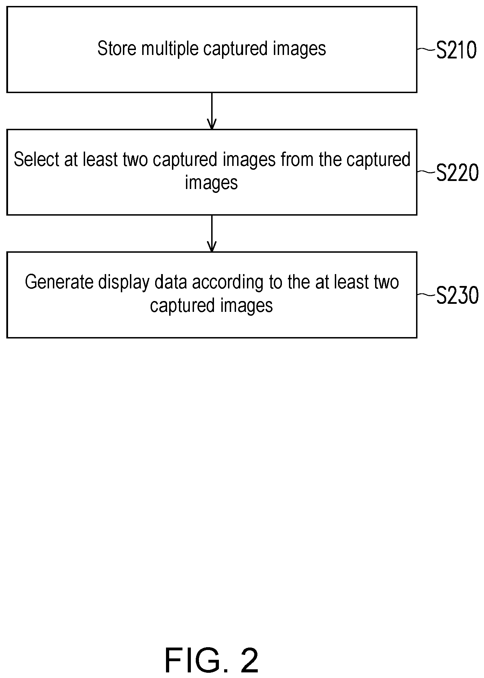

Referring to FIG. 1 and FIG. 2, the display system 100 is used to execute the following steps S210 to S230. In step S210, the storage device 130 may store multiple captured images. In step S220, the processing device 110 may select at least two captured images from the captured images. In step S230, the processing device 110 may generate display data according to the at least two captured images. The processing device 110 may drive the display device 120 according to the display data. The captured images have different light intensity distributions. Light intensity distribution measurement may use a "beam analyzer" or use a "light distribution curve measuring instrument" and a "distribution photometer" to measure the light intensity distribution of the captured images in space.

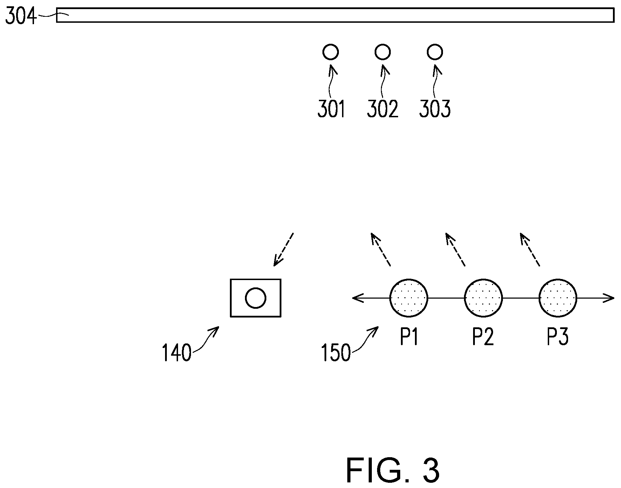

Referring to FIG. 3, the captured images of the disclosure may be generated by the image capturing device 140 shooting multiple capturing targets 301 to 303 and a background 304 illuminated by a light source device 150, and the image capturing device 140 outputs the captured images to the storage device 130. The number of image capturing devices, the number of light source devices, and the number of capturing targets of the disclosure are not limited to FIG. 3. The display system 100 may also include a generation system of display data, and the generation system of display data includes the image capturing device 140 and the light source device 150.

The captured images of the disclosure may be generated by the image capturing device 140 shooting at a fixed viewing angle position the capturing targets 301 to 303 illuminated by the light source device 150 sequentially switching at different light source positions P1 to P3. For example, when the light source device 150 is disposed at the light source position P1 and illuminates the capturing targets 301 to 303, the image capturing device 140 may shoot at a fixed viewing angle position to obtain a first captured image. When the light source device 150 is disposed at the light source position P2 and illuminates the capturing targets 301 to 303, the image capturing device 140 may shoot at a fixed viewing angle position to obtain a second captured image. When the light source device 150 is disposed at the light source position P3 and illuminates the capturing targets 301 to 303, the image capturing device 140 may shoot at a fixed viewing angle position to obtain a third captured image. Therefore, due to the position change of the light source device 150, the illumination effect on the capturing targets 301 to 303 also changes accordingly. As such, the first to third captured images may respectively have different light intensity distributions. The capturing targets 301 to 303 are affected by the illumination of the light source device 150 at different illumination angles, the capturing target images in the first to third captured images may have different gloss effects, and may effectively enhance the display effect when the display device 120 displays light field gloss images. The light field gloss display effect may be, for example, that the left eye and right eye of the observer may observe different brightness variations when viewing a stereoscopic image, and when the viewing angle of the observer changes, the observer may see continuously changing light and shadow displacement.

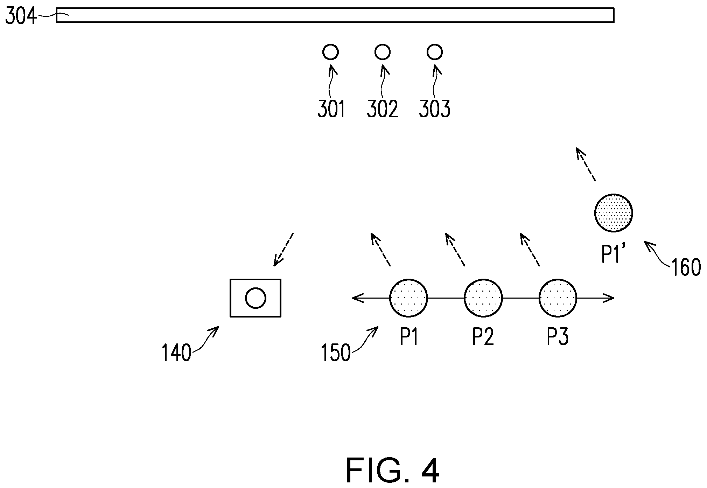

Referring to FIG. 4, the captured images may be generated by the image capturing device 140 shooting the capturing targets 301 to 303 and the background 304 illuminated by the light source device 150 and a light source device 160, and the image capturing device 140 outputs the captured images to the storage device 130 of FIG. 1. The number of image capturing devices, the number of light source devices, and the number of capturing targets of the disclosure are not limited to FIG. 4. The display system 100 of FIG. 1 may also include a generation system of display data, and the generation system of display data includes the image capturing device 140, the light source device 150, and the light source device 160.

In an embodiment, the captured images of the disclosure may be generated by the image capturing device 140 shooting, at a fixed viewing angle position, the capturing targets 301 to 303 illuminated by the light source device 150 sequentially switching at different light source positions P1 to P3, and further illuminated by the light source device 160 at a fixed light source position P1'. The viewing angle is the angle range at which the image capturing device 140 may receive images. The fixed viewing angle position means at the same position and receiving information of a fixed angle range of images. For example, when the light source device 150 is disposed at the light source position P1, the light source device 160 is disposed at the light source position P1', and the light source device 150 and the light source device 160 illuminate the capturing targets 301 to 303, the image capturing device 140 may shoot at the fixed viewing angle position to obtain a first captured image. When the light source device 150 is disposed at the light source position P2, the light source device 160 is disposed at the light source position P1', and the light source device 150 and the light source device 160 illuminate the capturing targets 301 to 303, the image capturing device 140 may shoot at the fixed viewing angle position to obtain a second captured image. When the light source device 150 is disposed at the light source position P3, the light source device 160 is disposed at the light source position P1', and the light source device 150 and the light source device 160 illuminate the capturing targets 301 to 303, the image capturing device 140 may shoot at the fixed viewing angle position to obtain a third captured image. Therefore, due to the position change of the light source device 150, the illumination effect on the capturing targets 301 to 303 also changes accordingly. As such, the first to third captured images may respectively have different light intensity distributions. In particular, the capturing targets 301 to 303 are affected by the illumination of the light source device 150 at different illumination angles, the capturing target images in the first to third captured images may have different gloss effects, and may effectively enhance the light field gloss display effect when the display device 120 is a light field gloss display.

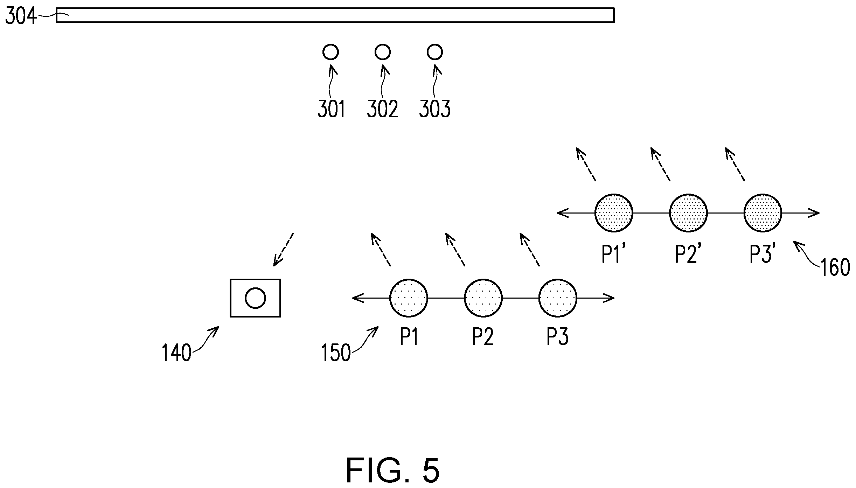

Referring to FIG. 5, the captured images of the disclosure may be generated by the image capturing device 140 shooting the capturing targets 301 to 303 and the background 304 illuminated by the light source device 150 and the light source device 160, and the image capturing device 140 outputs the captured images to the storage device 130. It should be noted that the number of image capturing devices, the number of light source devices, and the number of capturing targets of the disclosure are not limited to FIG. 5. In an embodiment, the display system 100 may also include a generation system of display data, and the generation system of display data includes the image capturing device 140, the light source device 150, and the light source device 160.

In an embodiment, the captured images of the disclosure may be generated by the image capturing device 140 shooting at a fixed viewing angle position the capturing targets 301 to 303 illuminated by the light source device 150 sequentially switching at different light source positions P1 to P3, and further illuminated by the light source device 160 sequentially switching at different light source positions P1' to P3'. For example, when the light source device 150 is disposed at the light source position P1, the light source device 160 is disposed at the light source position P1', and the light source device 150 and the light source device 160 illuminate the capturing targets 301 to 303, the image capturing device 140 may shoot at the fixed viewing angle position to obtain a first captured image. When the light source device 150 is disposed at the light source position P2, the light source device 160 is disposed at the light source position P2', and the light source device 150 and the light source device 160 illuminate the capturing targets 301 to 303, the image capturing device 140 may shoot at a fixed viewing angle position to obtain a second captured image. When the light source device 150 is disposed at the light source position P3, the light source device 160 is disposed at the light source position P3', and the light source device 150 and the light source device 160 illuminate the capturing targets 301 to 303, the image capturing device 140 may shoot at a fixed viewing angle position to obtain a third captured image. Therefore, due to the position change of the light source device 150, the illumination effect on the capturing targets 301 to 303 also changes accordingly. As such, the first to third captured images may respectively have different light intensity distributions. The capturing targets 301 to 303 are affected by the illumination of the light source device 150 and the light source device 160 at different illumination angles respectively, the capturing target images in the first to third captured images may have different gloss effects, and may effectively enhance the light field gloss display effect when the display device 120 is a light field gloss display. In addition, from another perspective, the captured images of the disclosure may be generated by the image capturing device 140 shooting the capturing targets illuminated by at least one light source device at different light source positions.

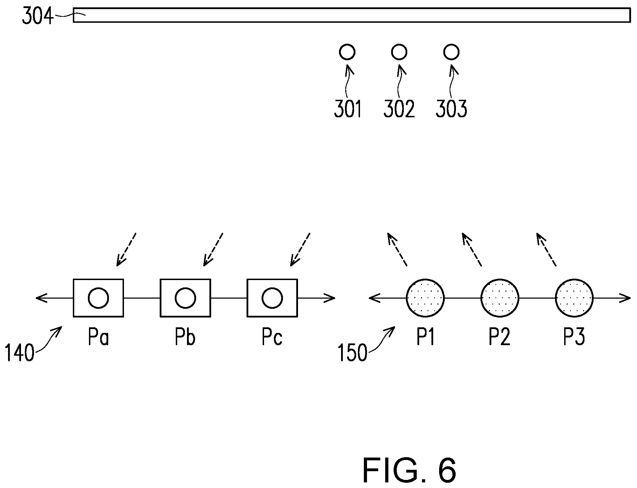

Referring to FIG. 6, in an embodiment, the captured images of the disclosure may be generated by the image capturing device 140 shooting multiple capturing targets 301 to 303 and the background 304 illuminated by the light source device 150, and the image capturing device 140 outputs the captured images to the storage device 130 of FIG. 1. It should be noted that the number of image capturing devices, the number of light source devices, and the number of capturing targets of the disclosure are not limited to FIG. 6. In an embodiment, the display system 100 of FIG. 1 may also include a generation system of display data, and the generation system of display data includes the image capturing device 140 and the light source device 150.

In an embodiment, the captured images of the disclosure may be generated by the image capturing device 140 sequentially switching at different viewing angle positions Pa to Pc and shooting the capturing targets 301 to 303 illuminated by the light source device 150 sequentially switching at different light source positions P1 to P3. For example, when the light source device 150 is disposed at the light source position P1 and illuminates the capturing targets 301 to 303, the image capturing device 140 may shoot at the viewing angle position Pa to obtain a first captured image. When the light source device 150 is disposed at the light source position P2 and illuminates the capturing targets 301 to 303, the image capturing device 140 may shoot at the viewing angle position Pb to obtain a second captured image. When the light source device 150 is disposed at the light source position P3 and illuminates the capturing targets 301 to 303, the image capturing device 140 may shoot at the viewing angle position Pc to obtain a third captured image. Therefore, due to the position change of the light source device 150, the illumination effect on the capturing targets 301 to 303 also changes accordingly. Moreover, due to the position change of the image capturing device 140, the image capturing results of the capturing targets 301 to 303 may have a deeper object contour effect or have a stereoscopic parallax effect (stereoscopic visual result). As such, the first to third captured images may respectively have different light intensity distributions. In particular, the capturing targets 301 to 303 are affected by the illumination of the light source device 150 at different illumination angles, the capturing target images in the first to third captured images may have different gloss effects, and may effectively enhance the light field gloss display effect when the display device 120 is a light field gloss display.

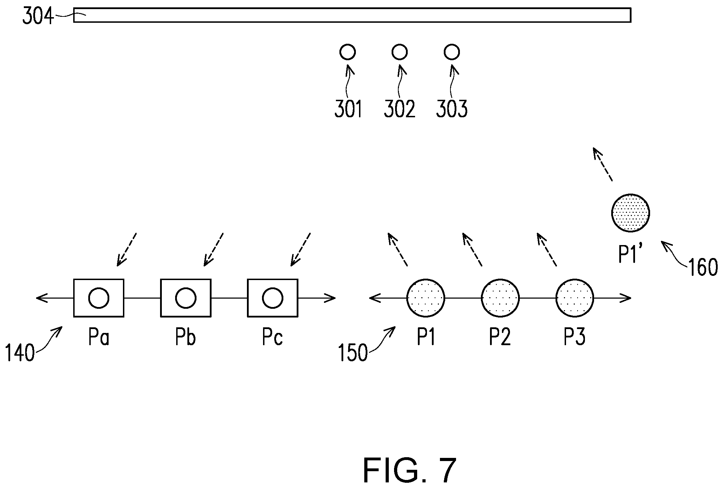

Referring to FIG. 7, in an embodiment, the captured images of the disclosure may be generated by the image capturing device 140 shooting the capturing targets 301 to 303 and the background 304 illuminated by the light source device 150 and the light source device 160, and the image capturing device 140 outputs the captured images to the storage device 130. The number of image capturing devices, the number of light source devices, and the number of capturing targets of the disclosure are not limited to FIG. 7. In an embodiment, the display system 100 may also include a generation system of display data, and the generation system of display data includes the image capturing device 140, the light source device 150, and the light source device 160.

In an embodiment, the captured images of the disclosure may be generated by the image capturing device 140 sequentially switching at different viewing angle positions Pa to Pc and shooting the capturing targets 301 to 303 illuminated by the light source device 150 sequentially switching at different light source positions P1 to P3, and further illuminated by the light source device 160 at a fixed light source position P1'. For example, when the light source device 150 is disposed at the light source position P1, the light source device 160 is disposed at the light source position P1', and light source device 150 and the light source device 160 illuminate the capturing targets 301 to 303, the image capturing device 140 may shoot at the viewing angle position Pa to obtain a first captured image. When the light source device 150 is disposed at the light source position P2, the light source device 160 is disposed at the light source position P1', and the light source device 150 and the light source device 160 illuminate the capturing targets 301 to 303, the image capturing device 140 may shoot at the viewing angle position Pb to obtain a second captured image. When the light source device 150 is disposed at the light source position P3, the light source device 160 is disposed at the light source position P1', and the light source device 150 and the light source device 160 illuminate the capturing targets 301 to 303, the image capturing device 140 may shoot at the viewing angle position Pc to obtain a third captured image. Therefore, due to the position change of the light source device 150, the illumination effect on the capturing targets 301 to 303 also changes accordingly. Moreover, due to the position change of the image capturing device 140, the image capturing results of the capturing targets 301 to 303 may have a deeper object contour effect or have a stereoscopic parallax effect (stereoscopic visual result). As such, the first to third captured images may respectively have different light intensity distributions. In particular, the capturing targets 301 to 303 are affected by the illumination of the light source device 150 at different illumination angles, the capturing target images in the first to third captured images may have different gloss effects, and may effectively enhance the light field gloss display effect when the display device 120 is a light field gloss display.

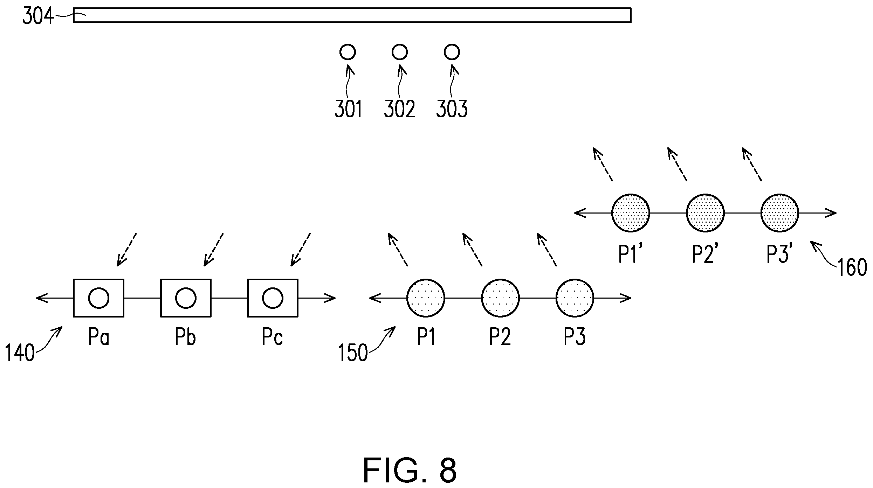

Referring to FIG. 8, in an embodiment, the captured images of the disclosure may be generated by the image capturing device 140 shooting the capturing targets 301 to 303 and the background 304 illuminated by the light source device 150 and the light source device 160, and the image capturing device 140 outputs the captured images to the storage device 130 of FIG. 1. It should be noted that the number of image capturing devices, the number of light source devices, and the number of capturing targets of the disclosure are not limited to FIG. 8. In an embodiment, the display system 100 of FIG. 1 may also include a generation system of display data, and the generation system of display data includes the image capturing device 140, the light source device 150, and the light source device 160. In an embodiment, the captured images of the disclosure may be generated by the image capturing device 140 sequentially switching at different viewing angle positions Pa to Pc and shooting the capturing targets 301 to 303 illuminated by the light source device 150 sequentially switching at different light source positions P1 to P3, and further illuminated by the light source device 160 sequentially switching at different light source positions P1' to P3'. For example, when the light source device 150 is disposed at the light source position P1, the light source device 160 is disposed at the light source position P1', and light source device 150 and the light source device 160 illuminate the capturing targets 301 to 303, the image capturing device 140 may shoot at the viewing angle position Pa to obtain a first captured image. When the light source device 150 is disposed at the light source position P2, the light source device 160 is disposed at the light source position P2', and the light source device 150 and the light source device 160 illuminate the capturing targets 301 to 303, the image capturing device 140 may shoot at the viewing angle position Pb to obtain a second captured image. When the light source device 150 is disposed at the light source position P3, the light source device 160 is disposed at the light source position P3', and the light source device 150 and the light source device 160 illuminate the capturing targets 301 to 303, the image capturing device 140 may shoot at the viewing angle position Pc to obtain a third captured image. Therefore, due to the position change of the light source device 150 and the light source device 160, the illumination effect on the capturing targets 301 to 303 also changes accordingly. Moreover, due to the position change of the image capturing device 140, the image capturing results of the capturing targets 301 to 303 may have a deeper object contour effect or have a stereoscopic parallax effect (stereoscopic visual result). As such, the first to third captured images may respectively have different light intensity distributions. In particular, the capturing targets 301 to 303 are affected by the illumination of the light source device 150 and the light source device 160 at different illumination angles, the capturing target images in the first to third captured images may have different gloss effects, and may effectively enhance the light field gloss display effect when the display device 120 is a light field gloss display. In addition, the disposing positions and quantities of the image capturing device, the light source device, the capturing target, and the background in the above embodiments of FIG. 3 to FIG. 8 are not limited to the descriptions of the above embodiments. The background is merely used to represent the scene background where the capturing target is located.

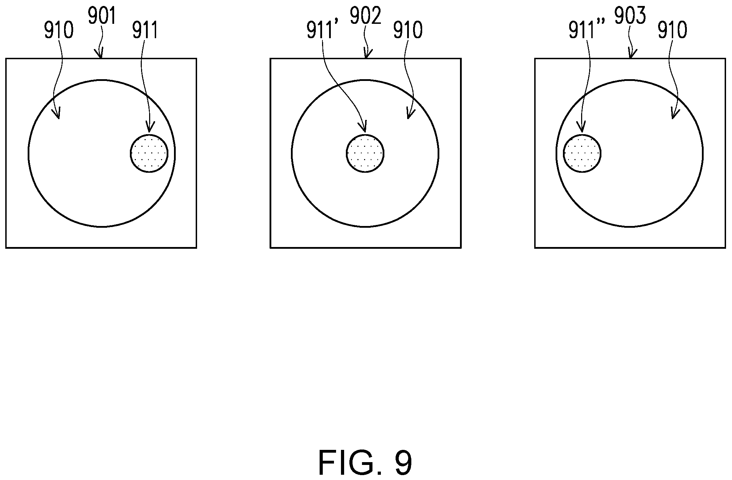

Referring to FIG. 9, taking captured images 901 to 903 as an example, the captured images 901 to 903 include a capturing target 910. The captured images 901 to 903 may also be post-processed via the processing device 110 or other image processors, so that the captured images 901 to 903 respectively have first high intensity spots 911, 911', and 911" at different positions on the capturing target 910, to simulate different gloss effects, and may effectively enhance the light field gloss display effect when the display device 120 is a light field gloss display, wherein the spot refers to any point in the image that is brighter than its surroundings. The first high intensity spots 911, 911', and 911" may have the same or different light intensities.

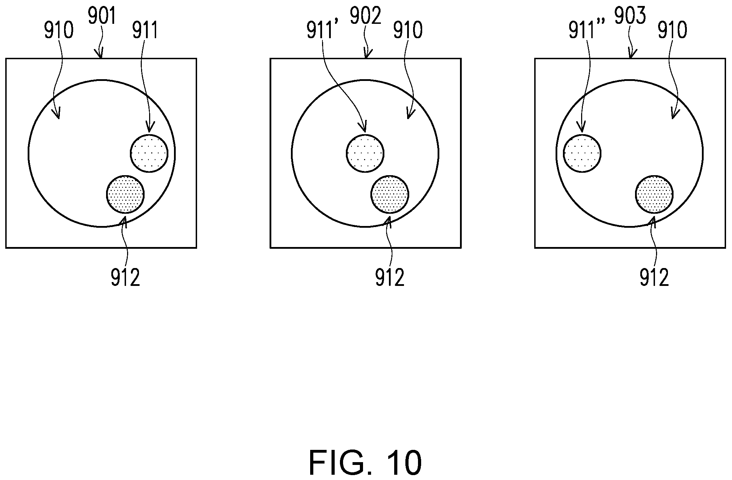

Referring to FIG. 10, taking captured images 901 to 903 as an example, the captured images 901 to 903 include a capturing target 910. The captured images 901 to 903 may also be post-processed via the processing device 110 or other image processors, so that the captured images 901 to 903 respectively have first high intensity spots 911, 911', and 911" at different positions on the capturing target 910, and have second high intensity spots 912 at the same position, to simulate different gloss effects, and may effectively enhance the light field gloss display effect when the display device 120 is a light field gloss display. The first high intensity spots 911, 911', and 911" and the second high intensity spots 912 may have the same or different light intensities.

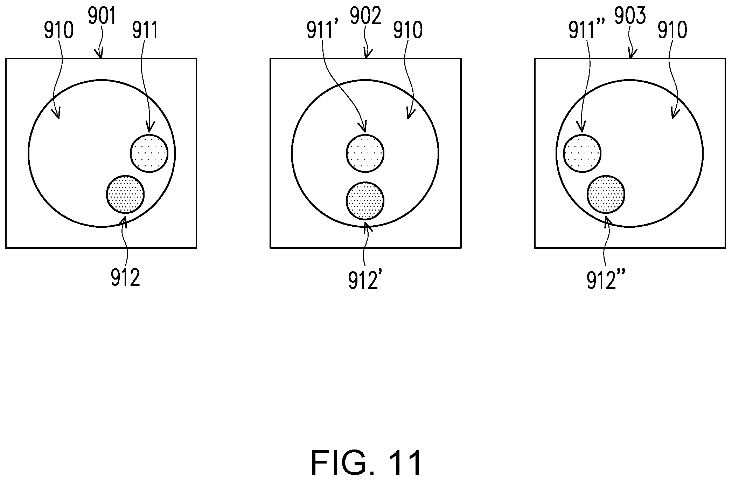

Referring to FIG. 11, taking captured images 901 to 903 as an example, the captured images 901 to 903 include a capturing target 910. The captured images 901 to 903 may also be post-processed via the processing device 110 or other image processors, so that the captured images 901 to 903 respectively have first high intensity spots 911, 911', and 911" at different positions on the capturing target 910, and have second high intensity spots 912, 912', and 912" at different positions, to simulate different gloss effects, and may effectively enhance the light field gloss display effect when the display device 120 is a light field gloss display. The first high intensity spots 911, 911', and 911" and the second high intensity spots 912 may have the same or different light intensities.

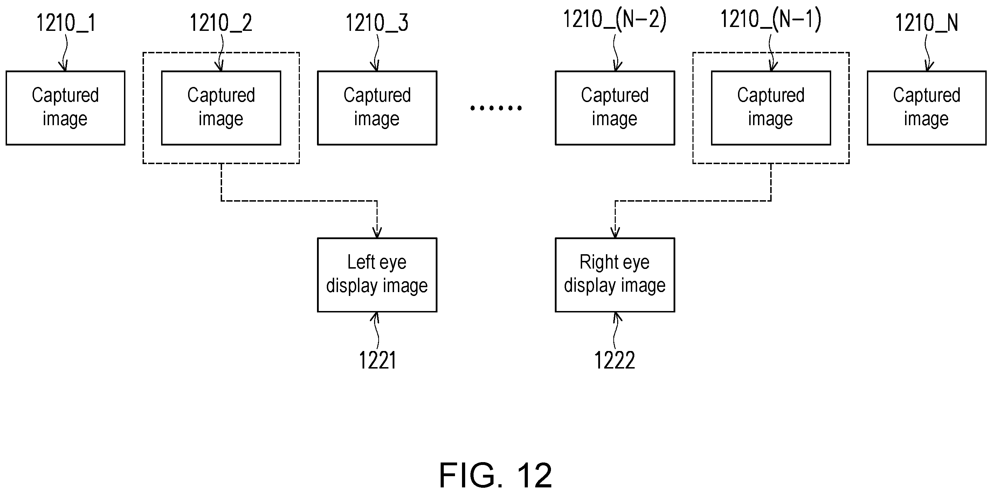

Referring to FIG. 1 and FIG. 12, in an embodiment, the storage device 130 may store multiple captured images 1210_1 to 1210_N as shown in FIG. 12, in which N is a positive integer. When the display device 120 is, for example, a single-viewer three-dimensional display, an autostereoscopic (a naked eye) three-dimensional display, an augmented reality display, a virtual reality display, a mixed reality display, a multi-view three-dimensional display, or a light field display, the processing device 110 may select at least one first image from the captured images 1210_1 to 1210_N to generate left eye display data, and select at least one second image from the captured images 1210_1 to 1210_N to generate right eye display data. For example, the processing device 110 may determine to select the captured image 1210_2 from the captured images 1210_1 to 1210_N as a left eye display image 1221 according to the current viewing angle, viewing direction, or human eye position of the observer detected by a detector, and generate corresponding left eye display data. The processing device 110 may determine to select the captured image 1210_(N-1) from the captured images 1210_1 to 1210_N as a right eye display image 1222 according to the current viewing angle, viewing direction, or human eye position of the observer detected by the detector, and generate corresponding right eye display data. Alternatively, the processing device 110 may also select the captured images 1210_1 and 1210_3 from the captured images 1210_1 to 1210_N and perform image synthesis to generate the left eye display image 1221, and generate corresponding left eye display data. The processing device 110 may select the captured images 1210_(N-2), 1210_N from the captured images 1210_1 to 1210_N and perform image synthesis to generate the right eye display image 1222, and generate corresponding right eye display data.

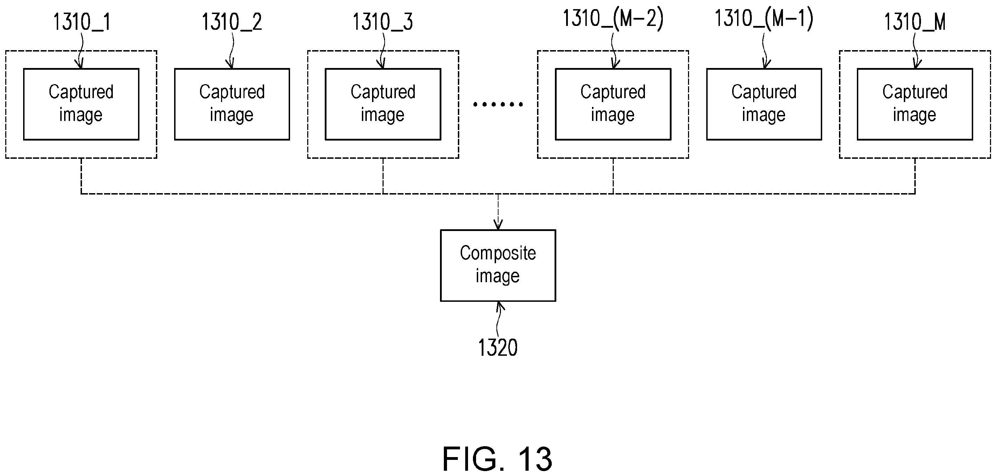

Referring to FIG. 1 and FIG. 13, in an embodiment, the storage device 130 may store multiple captured images 1310_1 to 1310_M as shown in FIG. 13, in which M is a positive integer. When the display device 120 is, for example, a multi-viewer three-dimensional display, an autostereoscopic (a naked eye) three-dimensional display, a multi-view three-dimensional display, or a light field display, the processing device 110 may select at least two captured images from the captured images 1310_1 to 1310_M, and synthesize the at least two captured images into a composite image 1320 to generate display data. For example, the processing device 110 may select the captured images 1310_1, 1310_3, 1310_(M-2), and 1310_M from the captured images 1310_1 to 1310_M to synthesize into the composite image 1320, and generate corresponding display data. Alternatively, the processing device 110 may also select all of the captured images 1310_1 to 1310_M to synthesize into the composite image 1320.

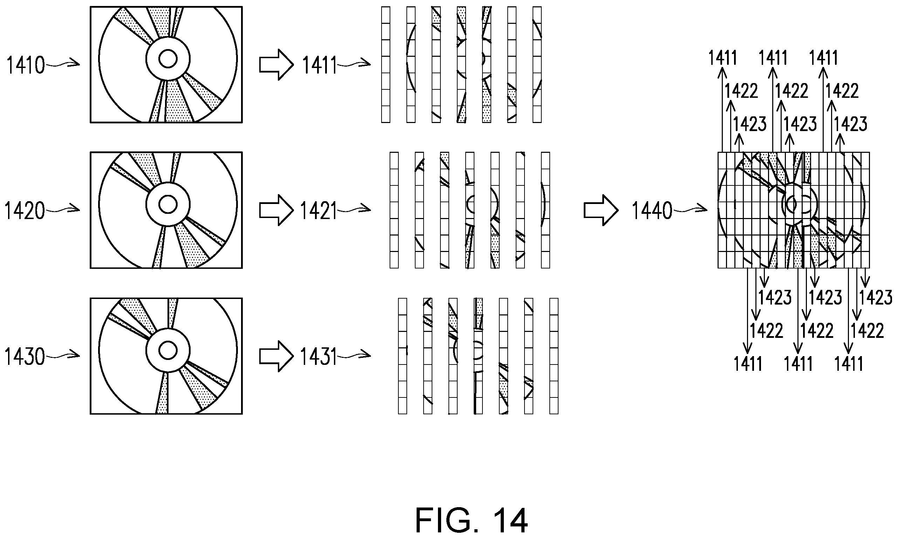

Referring to FIG. 1 and FIG. 14, in an embodiment, when the display device 120 is, for example, a light field gloss display, the processing device 110 may generate a composite image 1440 by the image synthesis method as shown in FIG. 14, but the disclosure is not limited thereto. In other embodiments, the light field gloss display may also utilize other image processing methods to display image content having a light field gloss display effect using different captured images. In an embodiment, the processing device 110 may generate a composite image 1440 and output the composite image 1440 to the display device 120, so that the display device 120 may, based on the composite image 1440, show a captured target image having a display effect with gloss variations (such as a realistic gloss effect) to observers viewing from different viewing angles.

Specifically, taking captured images 1410, 1420, and 1430 as an example, the captured image 1410 may correspond to an image of a right-side viewing angle. The captured image 1420 may correspond to an image of a central viewing angle. The captured image 1430 may correspond to an image of a left-side viewing angle. The right-side viewing angle, the central viewing angle, and the left-side viewing angle may refer to the angles between the line of sight of the observer viewing the display device 120 from a right-side position, a front position, and a left-side position of the display device 120 and the display plane of the display device 120. The processing device 110 may capture a partial image 1411 corresponding to the right viewing angle orientation in the captured image 1410 (for example, image blocks of columns 1, 4, and 7 to (1+3k), in which k is a positive integer), may capture a partial image 1421 corresponding to the central viewing angle orientation in the captured image 1420 (for example, image blocks of columns 2, 5, and 8 to (2+3k)), and may capture a partial image 1431 corresponding to the left viewing angle orientation in the captured image 1430 (for example, image blocks of columns 3, 6, and 9 to (3+3k)). Then, the processing device 110 may combine the partial images 1411, 1421, and 1431 to generate the composite image 1440. In this regard, multiple pixels of the display device 120 (i.e., the light field gloss display) may have directivity, so that the observer may observe display results of different pixels at different viewing angles. Therefore, when the display device 120 displays the composite image 1440, the observer may, for example, view the light field gloss display effect with different gloss variations of the captured images 1410, 1420, and 1430 at the right-side viewing angle, the central viewing angle, and the left-side viewing angle, respectively. The observer may view the image content of the image blocks of, for example, columns 1, 4, and 7 to (1+3k) of the partial image 1411 at the right-side viewing angle. The observer may view the image content of the image blocks of, for example, columns 2, 5, and 8 to (2+3k) of the partial image 1421 at the central viewing angle. The observer may view the image content of the image blocks of, for example, columns 3, 6, and 9 to (3+3k) of the partial image 1431 at the left-side viewing angle.

In summary, the generation method of display data and the generation system of display data of the disclosure may utilize at least one light source device to illuminate the capturing target at different illumination angles to generate multiple captured images having different gloss effects. The generation method of display data and the generation system of display data of the disclosure may utilize the captured images having different gloss effects to generate corresponding display data, so that the capturing target displayed by the display device may have a display effect similar to realistic gloss variations (i.e., presenting material features close to reality), or even an enhanced gloss display effect (enhancing material gloss features, not merely realistic gloss variations).

In another embodiment, the disclosure provides a display system including a display and a tracking element, and a method for using tracking technology to detect the position of a user and adjust the displayed image content to improve the viewing angle continuity of the display. In the embodiment, the display system may actively adjust the input image content to ensure that the user may view continuous and exemplary images at different viewing angles.

Specifically, the tracking element may include an eye tracker or a head tracker. The display system may detect the position of the user's eyeball (for example, including three-dimensional coordinates (x, y, z)) through the eye tracker or the head tracker, and based on the position information, dynamically select multiple pieces of original image content most suitable for the current viewing angle from an original image group and perform calculations to generate display image content. The display image content may be implemented through various methods.

In an embodiment, the display image content may adopt a direct average method to perform an average calculation on pixel values (such as grayscale or brightness) of multiple pieces of original image content (for example, 2, 3, 5, or 7 pieces) to generate the display image content. In another embodiment, the display image content may adopt a gradient-ratio mixing method to utilize gradient information to mix multiple pieces of original image content at different ratios to generate the display image content (for example, Imagenew = Image0*20% + Image1*80%). In another embodiment, the display image content may adopt an interpolation method to perform interpolation (for example, interpolation) on multiple pieces of original image content to generate the display image content at more angles, thereby filling the gaps between viewing angles. In another embodiment, the display image content may adopt an interpolation and mixed method to first perform interpolation processing on the original image content to expand angle information, and then combine with the average or mixed by Gradient ratio method to generate the display image content. The "multiple image selection method" adopted in the disclosure may vary according to different 3D algorithms, and is applicable to two-view (or dual-view)VR/3D displays, multi-view 3D displays, and even light field displays. By detecting the current position of the user and combining with the above image processing techniques, the disclosure may provide a smoother, more continuous, and more exemplary visual experience, providing an improved and consistent visual experience for a user regardless of the user's movement.

## Claims

1. A generation method of display data, comprising:
storing a plurality of captured images (901 to 903, 1210_1 to 1210_N, 1310_1 to 1310_M, 1410, 1420, 1430), wherein the plurality of captured images (901 to 903, 1210_1 to 1210_N, 1310_1 to 1310_M, 1410, 1420, 1430) have different light intensity distributions;
selecting at least two captured images from the plurality of captured images (901 to 903, 1210_1 to 1210_N, 1310_1 to 1310_M, 1410, 1420, 1430); and
generating the display data according to the at least two captured images.

2. The generation method of display data according to claim 1, wherein the plurality of captured images (901 to 903, 1210_1 to 1210_N, 1310_1 to 1310_M, 1410, 1420, 1430) are generated by shooting a capturing target (301 to 303, 910) illuminated by at least one light source device (150, 160) at different light source positions via an image capturing device (140).

3. The generation method of display data according to claim 1, wherein the plurality of captured images (901 to 903, 1210_1 to 1210_N, 1310_1 to 1310_M, 1410, 1420, 1430) are generated by shooting a capturing target (301 to 303, 910) illuminated by a first light source device (150) at different light source positions and illuminated by a second light source device (160) at a fixed light source position via an image capturing device (140).

4. The generation method of display data according to claim 1, wherein the plurality of captured images (901 to 903, 1210_1 to 1210_N, 1310_1 to 1310_M, 1410, 1420, 1430) are generated by shooting a capturing target (301 to 303, 910) at a fixed viewing angle position via an image capturing device (140).

5. The generation method of display data according to claim 1, wherein the plurality of captured images (901 to 903, 1210_1 to 1210_N, 1310_1 to 1310_M, 1410, 1420, 1430) are generated by shooting a capturing target (301 to 303, 910) at different viewing angle positions via an image capturing device (140).

6. The generation method of display data according to claim 5, wherein the plurality of captured images (901 to 903, 1210_1 to 1210_N, 1310_1 to 1310_M, 1410, 1420, 1430) respectively have first high intensity spots (911, 911', 911") at different positions on the capturing target (301 to 303, 910).

7. The generation method of display data according to claim 6, wherein the plurality of captured images (901 to 903, 1210_1 to 1210_N, 1310_1 to 1310_M, 1410, 1420, 1430) respectively further have second high intensity spots (912, 912', 912") at the same position or different positions on the capturing target (301 to 303, 910).

8. The generation method of display data according to claim 1, wherein generating the display data comprises: selecting at least one first image from the plurality of captured images (901 to 903, 1210_1 to 1210_N, 1310_1 to 1310_M, 1410, 1420, 1430) to generate left eye display data, and selecting at least one second image from the plurality of captured images (901 to 903, 1210_1 to 1210_N, 1310_1 to 1310_M, 1410, 1420, 1430) to generate right eye display data.

9. The generation method of display data according to claim 8, wherein generating the left eye display data and the right eye display data comprises: determining the left eye display data and the right eye display data according to an observer detected by a detector.

10. The generation method of display data according to claim 1, wherein generating the display data comprises: synthesizing the at least two captured images into a composite image (1320, 1440) to generate the display data.

11. A display system (100), comprising:
a display device (120);
a storage device (130), for storing a plurality of captured images (901 to 903, 1210_1 to 1210_N, 1310_1 to 1310_M, 1410, 1420, 1430), wherein the plurality of captured images (901 to 903, 1210_1 to 1210_N, 1310_1 to 1310_M, 1410, 1420, 1430) are generated by shooting a capturing target (301 to 303, 910) illuminated by a first light source device (150) at different light source positions via an image capturing device (140); and
a processing device (110), coupled to the display device (120) and the storage device (130), and for selecting at least two captured images from the plurality of captured images (901 to 903, 1210_1 to 1210_N, 1310_1 to 1310_M, 1410, 1420, 1430), wherein the processing device (110) generates display data according to the at least two captured images, and drives the display device (120) according to the display data.

12. The display system (100) according to claim 11, wherein the plurality of captured images (901 to 903, 1210_1 to 1210_N, 1310_1 to 1310_M, 1410, 1420, 1430) are generated by shooting a capturing target (301 to 303, 910) illuminated by the first light source device (150) at different light source positions and illuminated by a second light source device (160) at a fixed light source position via the image capturing device (140).

13. The display system (100) according to claim 11, wherein the processing device (110) selects at least one first image from the plurality of captured images (901 to 903, 1210_1 to 1210_N, 1310_1 to 1310_M, 1410, 1420, 1430) to generate left eye display data, and selects at least one second image different from the at least one first image from the plurality of captured images (901 to 903, 1210_1 to 1210_N, 1310_1 to 1310_M, 1410, 1420, 1430) to generate right eye display data.

14. The display system (100) according to claim 13, wherein the processing device (110) determines the left eye display data and the right eye display data according to an observer detected by a detector.

15. The display system according to claim 11, wherein the processing device (110) synthesizes the at least two captured images into a composite image (1320, 1440) to generate the display data.
